# EUROPÄISCHE PATENTSCHRIFT

(11) **EP 1 454 964 B1**
(45) Veröffentlichungstag und Bekanntmachung des Hinweises auf die Patenterteilung: **07.06.2006**
(21) Anmeldenummer: 04004015.6
(22) Anmeldetag: 23.02.2004
(51) Int. Cl.: C09B 67/20, C09D 11/00

(54) **Pigmentpreparationen**
Pigment compositions
Compositions pigmentaires

(30) Priorität: 05.03.2003 DE 10309819
(43) Veröffentlichungstag der Anmeldung: 08.09.2004
(73) Patentinhaber: LANXESS Deutschland GmbH, 51369 Leverkusen (DE)
(72) Erfinder: Herrmann, Udo, Dr., 41541 Dormagen (DE); Pfützenreuter, Dirk, 51399 Burscheid (DE); Witt, Josef, 51377 Leverkusen (DE); Hartrumpf, Hans-Jürgen, 51375 Leverkusen (DE)

(56) Entgegenhaltungen:
- EP-A- 1 213 333
- WO-A-01/92421
- WO-A-99/67352
- US-A- 4 789 400
- US-A- 5 017 644
- US-A- 5 888 400
- US-B1- 6 478 866

## Beschreibung

Die vorliegende Erfindung betrifft neue Pigmentpräparationen, Verfahren zu ihrer Herstellung sowie ihre Verwendung, insbesondere zur Herstellung von Aufzeichnungsflüssigkeiten für den Ink-Jet-Druck.

Wässrige Drucktinten für den Tintenstrahldruck sind sowohl auf Basis wasserlöslicher organischer Farbstoffe als auch auf Basis organischer Farbpigmente bekannt und weitgehend beschrieben. Gegenüber den Farbstoffen liefern Pigmente eine wesentlich höhere Licht- und Ozonstabilität der Ausdrucke. Das wichtigste Pigment für diese Anwendung ist Ruß, dessen Ink-Jet-Ausdrucke im Gegensatz zu Schwarzfarbstoffen dokumentenecht, d.h. lichtstabil und auswaschsicher sind.

Der weiten Verbreitung von Pigmenttinten stehen allerdings in manchen Fällen ihre Dispersionseingenschaften entgegen. In einer nicht optimalen Dispersion können die Pigmentpartikel agglomerieren. Dadurch verändert sich die Teilchengrößenverteilung, sie wird inhomogener und so können Andruckprobleme entstehen und die Druckqualität nimmt ab.

Man kann die Rußpartikel kapseln, um ihre Agglomerationsneigung zu vermindern, wie in dem Artikel " Color Pigment Encapsulation" von Robert Lustenader (ink jet world 01/1995, pp75) beschrieben.

Ein weiterer Ansatz besteht darin, die Pigmente zu funktionalisieren (US-A 5 554 739 und US-A 5 922 118). Der Nachteil ist allerdings die erhöhte Migrationsneigung und die damit verbundene geringere Wasserechtheit.

Aufgabe war es nun, Pigmentpräparationen mit einer geringen Agglomerationsneigung, insbesondere mit einem guten Andruckverhalten bereitzustellen.

Es wurden nun Pigmentpräparationen gefunden, enthaltend
a) wenigstens ein Pigment,
b) wenigstens ein Polyethylenimin, das alkoxyliert, insbesondere ethoxyliert und propoxyliert und/oder butoxyliert ist und
c) wenigstens ein Kondensationsprodukt auf Basis von
   A) sulfonierten Aromaten,
   B) Aldehyden und/oder Ketonen und gegebenenfalls
   C) einer oder mehrerer Verbindungen, ausgewählt aus der Gruppe der nicht sulfonierten Aromaten, Harnstoff und Harnstoffderivaten.

Als Pigmente kommen sowohl anorganische als auch organische Pigmente in Frage.

Als organische Pigmente sind hierbei auch Küpenfarbstoffe zu verstehen. Selbstverständlich können die erfindungsgemäßen Pigmentpräparationen Mischungen verschiedener organischer oder verschiedener anorganischer Pigmente oder organischer und anorganischer Pigmente enthalten.

Beispiele für geeignete Pigmente (a) sind dabei:
Organische Pigmente:
   - Monoazopigment:
      C.I. Pigment Brown 25;
      C.I. Pigment Orange 5, 13, 36 und 67;
      C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251;
      C.I. Pigment Yellow 1, 3, 73, 74, 65, 97, 151 und 183;
   - Disazopigmente:
      C.I. Pigment Orange 16, 34 und 44;
      C.I. Pigment Red 144, 166, 214 und 242;
      C.I. Pigment Yellow 12, 13, 14, 16, 17, 81, 83, 106, 113, 126, 127, 155, 174, 176 und 188,
   - Anthanthronpigmente:
      C.I. Pigment Red 168
      (C.I. Vat Orange 3);
   - Anthrachinonpigmente:
      C.I. Pigment Yellow 147 und 177;
      C.I. Pigment Violet 31;
   - Anthrapyrimidinpigmente:
      C.I. Pigment Yellow 108
      (C.I. Vat Yello 20),
   - Chinacridonpigmente:
      C.I. Pigment Red 122, 202 und 206;
      C.I. Pigment Violet 19;
   - Chinophthalonpigmente:
      C.I. Pigment Yellow 138;
   - Dioxazinpigmente:
      C.I. Pigment Violett 23 und 37,
   - Flavanthronpigmente:
      C.I. Pigment Yellow 24;
      (C.I. Vat Yellow 1);
      Indanthronpigmente:
      C.I. Pigment Blue 60;
      (C.I. Vat Blue 4)
      und 64 (C.I. Vat Blue 6);
   - Isoindolinpigmente:
      C.I. Pigment Orange 69;
      C.I. Pigment Red 260;
      C.I. Pigment Yellow 139 und 185;
   - Isoindolinonpigmente:
      C.I. Pigment Orange 61;
      C.I. Pigment Red 257 und 260;
      C.I. Pigment Yellow 109, 110, 173 und 185;
   - Isoviolanthronpigmente:
      C.I. Pigment Violet 31;
      (C.I. Vat Violet 1);
   - Metallkomplexpigmente:
      C.I. Pigment Yellow 117, 150 und 153;
      C.I. Pigment Green 8;
   - Perinonpigmente:
      C.I. Pigment Orange 43;
      (C.I. Vat Orange 7);
      C.I. Pigment Red 194;
      (C.I. Vat 15);
   - Perylenpigmente:
      C.I. Pigment Black 31 und 32;
      C.I. Pigment Red 123, 149, 178, 179, (C.I. Vat Red 23), 190 und 240;
      C.I. Pigment Violet 29;
   - Phthalocyaninpigmente:
      C.I. Pigment Blue 15, 15:1, 15:2, 15:3, 15:4, 15:6 und 16;
      C.I. Pigment Green 7 und 36;
   - Pyranthronpigmente:
      C.I. Pigment Orange 51;
      C.I. Pigment Red 216;
      (C.I. Vat Orange 4);
   - Thioindigopigmente:
      C.I. Pigment Red 88 und 181;
      (C.I. Vat Red 1);
      C.I. Pigment Violet 38;
      (C.I. Vat Violet 3);
   - Triarylcarboniumpigmente:
      C.I. Pigment Blue 1, 61 und 62;
      C.I. Pigment Green 1;
      C.I. Pigment Red 81, 81:1 und 169;
   - C.I. Pigment Black 1 (Anilinschwarz);
   - C.I. Pigment Yellow 101 (Aldazingelb);
   - C.I. Pigment Brown 22.
Küpenfarbstoffe (außer den bereits oben genannten):
   - C.I. Vat Yellow 2, 3, 4, 5, 9, 10, 12, 22, 26, 33, 37, 46, 48, 49 und 50;
   - C.I. Vat Orange 1, 2, 5, 9, 11, 13, 15, 19, 26, 29, 30 und 31;
   - C.I. Vat Red 2, 10, 12, 13, 14, 16, 19, 21, 31, 32, 37, 41, 51, 52 und 61;
   - C.I. Vat Violet 2, 9, 13, 14, 15, 17 und 21;
   - C.I. Vat Blue 1 (C.I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74;
   - C.I. Vat Green 1, 2, 3, 5, 7, 8, 9, 13, 14, 17, 26, 29, 30, 31, 32, 33, 40, 42, 43, 44 und 49;
   - C.I. Vat Green 1, 2, 3, 5, 7, 8, 9, 13, 14, 17, 26, 29, 30, 31, 32, 33, 40, 42, 43, 44 und 49;
   - C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84,
   - C.I. Vat Black 1, 2, 7, 8, 9, 13, 14, 16, 19, 20, 22, 25, 27, 28, 29, 30, 31, 32, 34, 36, 56, 57, 58, 63, 64 und 65;
Anorganische Pigmente:
   - Weißpigmente:
      Titandioxid (C.I. Pigment White 6), Zinkweiß, Farbenzinkoxid; Zinksulfid, Lithopone; Bleiweiß;
   - Schwarzpigmente:
      Eisenoxidschwarz (C.I. Pigment Black 11), Eisen-Mangan-Schwarz, Spinellschwarz (C.I. Pigment Black 27); Ruß
      (C.I. Pigment Black 7);
   - Buntpigmente:
      Chromoxid, Chromoxidhydratgrün; Chromgrün (C.I. Pigment Green 48); Cobaltgrün (C.I. Pigment Green 50); Ultramaringrün;
      Kobaltblau (C.I. Pigment Blue 28 und 36); Ultramarinblau; Eisenblau (C.I. Pigment Blue 27); Manganblau; Ultramarinviolett; Kobalt- und Manganviolett;
      Eisenoxidrot (C.I. Pigment Red 101); Cadmiumsulfoselenid (C.I. Pigment Red 108); Molybdatrot (C.I. Pigment Red 104); Ultramarinrot;
      Eisenoxidbraun, Mischbraun, Spinell- und Korundphasen (C.I. Pigment Brown 24, 29 und 31), Chromorange; Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35); Chromgelb (C.I. Pigment Yellow 34), Zinkgelb, Erdalkalichromate; Neapelgelb; Bismutvanadat (C.I. Pigment Yellow 184);
   - Interferenzpigmente:
      Metalleffektpigmente auf der Basis beschichteter Metallplättchen; Perlglanzpigmente auf der Basis metalloxidbeschichteter Glimmerplättchen; Flüssigkristallpigmente.

Als bevorzugte Pigmente sind dabei Monoazopigmente (insbesondere verlackte BONS-Pigmente, Naphtol AS-Pigmente), Disazopigmente (insbesondere Diarylgelbpigmente, Bisacetessigsäureacetanilidpigmente, Disazopyrazolonpigmente), Chinacridonpigmente, Chinophthalonpigmente, Perinonpigmente, Phthalocyaninpigmente, Triarylcarboniumpigmente (Alkaliblaupigmente, verlackte Rhodamine, Farbstoffsalze mit komplexen Anionen), Isoindolinpigmente und Ruße (insbesondere Gas- oder Ofenruße) zu nennen.

Beispiele für besonders bevorzugte Pigmente sind im einzelnen: C.I. Pigment Yellow 138, C.I. Pigment Red 122, C.I. Pigment Violet 19, C.I. Pigment Blue 15:3 und 15:4, C.I. Pigment Black 7, C.I. Pigment Orange 5, 38 und 43 und C.I. Pigment Green 7.

Besonders bevorzugte Pigmente sind solche vom Typ Ruße, die in einer 5 %igen wässrigen Anschlämmung einen pH-Wert ≤ 4,5 aufweisen, wie Spezialschwarz 4, Spezialschwarz 4a, Spezialschwarz 5, Spezialschwarz 6, Spezialschwarz 100, Spezialschwarz 250, Spezialschwarz 350, Spezialschwarz 550, sowie Farbruße der Typen FW 200, FW 2, FW 2V, FW 285, FW 1, FW 18, S 160, S 170, Printex Typen V, 140 U, 140 U, Pigment Yellow 150, Pigmente Yellow 74, Pigment Blue 15:3, Pigment blue 15:2, Pigment blue 15:1, Pigment Red 122.

In einer bevorzugten Ausführungsform entspricht das alkoylierte Polyethylenimin der Komponente
b) einem Polyethylenimin, das zunächst propoxyliert oder butoxyliert und anschließend ethoxyliert wurde.

Bevorzugt sind Polyethylenimine (b), die pro mol NH-Funktion 1 bis 10 mol, insbesondere 1 bis 6 mol, vor allem 2 bis 5 mol, Propylenoxid- oder Butylenoxideinheiten aufweisen.

Der Ethylenoxidgehalt der Polyethylenimine (b) beträgt bevorzugt 10 bis 40 mol, besonders bevorzugt 15 bis 35 mol, ganz besonders bevorzugt 20 bis 30 mol, Ethylenoxideinheiten pro mol NH-Funktion.

Besonders geeignet sind Polyethylenimine, die mindestens 12, insbesondere 20 bis 45, vor allem 25 bis 40 mol Alkylenoxideinheiten pro mol enthalten.

In der Regel weist das die Komponente (b) bildende Polyethylenimin vor der Alkoxylierung ein mittleres Molekulargewicht M_{w} von 400 bis 25 000 g/mol, bevorzugt 1200 bis 20 000 g/mol, besonders bevorzugt 2000 bis 5000 g/mol und ganz besonders bevorzugt etwa 3000 g/mol auf.

Die Polyethylenimine (b) sind aus der WO-A-99/67352 bekannt und können, wie dort beschrieben, hergestellt werden.

Kondensationsprodukt der Komponente c):

Auf Basis von bedeutet, dass das Kondensationsprodukt gegebenenfalls aus weiteren Reaktanden neben A, B und gegebenenfalls C hergestellt wurde. Vorzugsweise werden die Kondensationsprodukte im Rahmen dieser Anmeldung jedoch nur aus A, B und gegebenenfalls C hergestellt.

Als sulfonierte Aromaten der Komponente A) werden im Rahmen dieser Anmeldung auch sulfomethylierte Aromaten verstanden. Bevorzugte sulfonierte Aromaten sind: Naphthalinsulfonsäuren, Phenolsulfonsäuren, Dihydroxybenzolsulfonsäuren, sulfonierte Ditolylether, sulfomethyliertes 4,4'-Dihydroxydiphenylsulfon, sulfoniertes Diphenylmethan, sulfoniertes Biphenyl, sulfoniertes Hydroxybiphenyl, insbesondere 2-Hydroxybiphenyl, sulfoniertes Terphenyl oder Benzolsulfonsäuren.

Als Aldehyde und/oder Ketone der Komponente B) kommen insbesondere aliphatische, cycloaliphatische sowie aromatische in Frage. Bevorzugt sind aliphatische Aldehyde, wobei besonders bevorzugt Formaldehyd sowie andere aliphatische Aldehyde mit 3 bis 5 C-Atomen in Frage kommen.

Als nicht sulfonierte Aromaten der Komponente C) kommen beispielsweise Phenol, Kresol, 4,4'-Dihydroxydiphenylsulfon oder Dihydroxydiphenylmethan in Frage.

Als Harnstoffderivate können beispielsweise Dimethylolharnstoff, Melamin oder Guanidin genannt werden.

Als bevorzugtes Kondensationsprodukt der Komponente c) wird eines auf Basis von
A) wenigstens einem sulfonierten Aromaten, ausgewählt aus der Gruppe von Naphthalinsulfonsäuren, Phenolsulfonsäuren, Dihydroxybenzolsulfonsäuren, sulfonierte Ditolylether, sulfomethyliertem 4,4'-Dihydroxydiphenylsulfon, sulfoniertem Diphenylmethan, sulfoniertem Biphenyl, sulfoniertem Hydroxybiphenyl, insbesondere 2-Hydroxybiphenyl, sulfoniertem Terphenyl und Benzolsulfonsäuren,
B) Formaldehyd und gegebenenfalls
C) einer oder mehreren Verbindungen, ausgewählt aus der Gruppe von Phenol, Kresol, 4,4'-Dihydroxydiphenylsulfon, Dihydroxydiphenylmethan, Harnstoff, Dimethylolharnstoff, Melamin und Guanidin
eingesetzt.

Das bei der Kondensation bevorzugt erhaltene Kondensationsprodukt besitzt vorzugsweise einen mittleren Kondensationsgrad von 1 bis 150, besonders bevorzugt von 1 bis 20, insbesondere von 1 bis 5.

Die Kondensationsprodukte der Komponente c) können als wässrige Lösung oder Suspension oder als Feststoff beispielsweise als Pulver oder Granulat, vorzugsweise als sprühgetrocknetes Pulver oder Granulat, eingesetzt werden.

Bevorzugte Kondensationsprodukte der Komponente c) weisen einen anorganischen Salzgehalt von unter 10 Gew.-%, vorzugsweise unter 5 Gew.-%, insbesondere unter 1 Gew.-% auf, bezogen auf die eingesetzte wässrige Lösung beziehungsweise Suspension der Komponente beziehungsweise bezogen auf den eingesetzten Feststoff der Komponente c).

Ebenfalls bevorzugt ist es, restmonomerenarme bis restmonomerenfreie Kondensationsprodukte der Komponente c) einzusetzen.

Unter "monomerenarm" wird ein Restmonomerengehalt von weniger als 30 Gew.-%, vorzugsweise weniger als 20 Gew.-%, bezogen auf das Kondensationsprodukt, insbesondere < 10 Gew.-%, vorzugsweise < 5 Gew.-%, verstanden. Unter Restmonomeren werden in diesem Zusammenhang die zur Herstellung des Kondensationsproduktes eingesetzten Reaktanden verstanden.

Derartige salzarme und restmonomerenarme Kondensationsprodukte sind beispielsweise aus EP-A 816 406 bekannt.

Die Kondensationsprodukte der Komponente c) können wie in EP-A 1 049 745 beschrieben hergestellt werden.

Die beiden Komponenten b) und c) werden in Summe vorzugsweise in einer Menge von 0,1 bis 200 Gew.-%, insbesondere von 5 bis 60 Gew.-%, bezogen auf das Pigment der Komponente a) eingesetzt.

Ebenfalls bevorzugt ist es, die Komponente b) zu c) in einem Gewichts-Verhältnis von 1:50 bis 20:1, insbesondere von 1:5 bis 1:1 einzusetzen.

Besonders bevorzugt enthält die erfindungsgemäße Pigmentpräparation Wasser oder ein wässriges Medium der Komponente e). Derart wässrige Pigmentpräparationen enthalten vorzugsweise
- 0,2 bis 50, vorzugsweise 1 bis 35 Gew.-% wenigstens eines Pigments der Komponente a)
- 5 bis 40 Gew.-% der Komponente b) und c) und
- 1 bis 88, vorzugsweise 5-60 Gew.-% wässriges Medium.

Als wässriges Medium ist entweder Wasser allein oder ein Gemisch aus Wasser mit organischen Lösungsmitteln zu verstehen, wobei diese vorzugsweise eine Wasserlöslichkeit von mehr als 5 g/l bei 20°C aufweisen.

Als geeignete organische Lösungsmittel kommen in Frage:

Aliphatische C₁-C₄ Alkohole, linear oder verzweigt, Pentandiol, aliphatische Ketone wie Aceton, Methylethylketon, Diacetonalkohol, Polyole wie Ethylenglycol, Diethylenglycol, Triethylenglycol, Polyglycole mit einer Molmasse von 200-2000 g/mol, Propylenglycol, Dipropylenglycol, Tripropylenglycol, Trimethylolpropan, Glycerin, Thiodiglycol, 2-Pyrrolidon, N-Methylpyrrolidon, N-Ethylpyrrolidon, 1,3-Dimethyl-imidazolidinon, Dimethylacetamid sowie Dimethylformamid.

Auch Gemische der erwähnten Lösungsmittel kommen in Betracht.

Die Menge des organischen Lösungsmittels beträgt vorzugsweise 0-50 %, insbesondere 0-35 %. Weiterhin kann die Pigmentpräparation Mittel zur Einstellung der Viskosität enthalten wie z.B. Polyvinylalkohol, Polyvinylpyrrolidon, Methylcellulose, Xanthane, soweit sie die Stabilität, das Druckverhalten und das Trocknungsverhalten auf Papier nicht negativ beeinflussen.

Zur Einstellung des pH-Wertes kann die Pigmentpräparation pH-Regler wie NaOH, KOH, Aminoethanol, Aminomethylpropanol, Triethanolamin, N,N-Dimethylaminoethanol, Diethanolamin oder Methyldiethanolamin enthalten.

Die Erfindung betrifft weiterhin ein Verfahren zur Herstellung der erfindungsgemäßen Pigmentpräparation, das dadurch gekennzeichnet ist, dass die Komponenten a) bis c) zusammen mit Wasser homogenisiert werden, anschließend gegebenenfalls von groben Partikeln befreit werden vorzugsweise mittels einer 1-10 µm Membran, einem Glasfilter oder Papiertuch und die Pigmentpräparation gegebenenfalls getrocknet wird.

Zur Homogenisierung werden die Einzelkomponenten vorzugsweise in einem Dissolver angeschlagen und anschließend in einer Hochenergieperlmühle beispielsweise mit Zirkonoxidperlen gemahlen.

Die Präparation wird in der Regel danach filtriert, beispielweise über 1-10 µm Membran- oder Glasfaserfilter.

Die erfindungsgemäßen Pigmentpräparationen zeigen eine hervorragende Lagerstabilität und liefern sowohl auf thermischen bubble jet-(HP, Encad) als auch auf Piezodruckern (Epson, Canon, Mutoh) Drucke mit ausgezeichneter Lichtechtheit. Darüber hinaus besitzen sie noch folgende Vorteile:

Keine Verstopfung des Druckkopfes, sowie eine hohe Wasser- und Migrationsechtheit.

Die Grundlagen der Farbmessung sind zu finden in:
Farbmessung BAYER Farben Revue, Sonderheft 3/2D (1986)

Die erfindungsgemäßen wässrigen Pigmentpräparationen können vorteilhaft zum Bedrucken von flächigen oder dreidimensional gestalteten Substraten im Ink-Jet-Verfahren eingesetzt werden, welches dadurch gekennzeichnet ist, dass man die Ink-Jet-Tinten auf das Substrat aufdruckt und den erhaltenen Druck gewünschtenfalls anschließend fixiert.

Beim Ink-Jet-Verfahren werden die üblicherweise wässrigen Tinten in kleine Tröpfchen direkt auf die Substrate gesprüht. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochener Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text Chem. Color, Band 19 (8), Seiten 23 bis 29, 1987, und Band 21 (6), Seiten 27 bis 32, beschrieben.

Besonders geeignet sind die erfindungsgemäßen Ink-Jet-Tinten für das Bubble-Jet-Verfahren und für das Verfahren mittels eines piezoelektrischen Kristalls.

Ist eine Fixierung des Drucks erwünscht, so kann man auf bekannte Weise und wie in der WO-A-99/01516 beschrieben vorgehen und z.B. ein Bindemittel, gewünschtenfalls in Form einer Dispersion oder Emulsion, auf das bedruckte Substrat auftragen und härten oder eine Folie auflaminieren.

Weitere Einzelheiten zu diesen Bindemitteln sind der WO-A-99/01516 zu entnehmen.

Die erfindungsgemäßen wässrigen Pigmentpräparationen können auf alle Arten von Substratmaterialien gedruckt werden. Als Substratmaterialien seien z.B.
- cellulosehaltige Materialien wie Papier, Pappe, Karton, Holz und Holzwerkstoffe, die auch lackiert oder anderweitig beschichtet sein können,
- metallische Materialien wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materalien wie Glas, Prozellan und Keramik, die ebenfalls beschichtet sein können,
- polymere Materialien jeder Art wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymer und Blockcopolymere, biologisch abbaubare Polymere und natürliche Polymere wie Gelatine,
- textile Materialien wie Fasern, Garne, Zwirne, Maschenware, Webware, Nonwovens und konfektionierte Ware aus Polyester, modifiziertem Polyester, Polyestermischgewebe, cellulosehaltige Materialien wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Velourleder,
- Lebensmittel und Kosmetika
genannt.

Die wässrigen Aufzeichnungsflüssigkeiten (Tinten) werden vorzugsweise dadurch erhalten, dass die nach dem erfindungsgemäßen Verfahren erhaltenen Pigmentpräparationen durch Zugabe von Wasser und/oder organischen Lösungsmitteln auf die gewünschte Farbstärke eingestellt werden.

### Beispiele:

Basisflüssigkeit für Druckversuche von Pigmenttinten:
15 % 1,5-Pentandiol
10 % Polyglycol 200
5 % 2-Pyrrolidon
70 % vollentsalztes Wasser

### Beispiel 1

In 380 g vollentsalztem (VE) Wasser wurden 7,7 g eines ethoxilierten/propoxylierten Polyethylenimins (mit 1,1 % Basenstickstoff- und 63 % Polyoxiethylengehalt, 1 % Polyoxypropylengehalt) und 25 g eines salzarmen Naphthalinsulfonsäure/Formaldehyd Kondensates (mit einer mittleren Molmasse von 1000-1500 g/mol) gelöst. Nun wurden 90 g eines sauren Gasrußes mit einer BET-Oberfläche von 180 m²/g und einem pH-Wert einer 5 %igen wässrigen Anschlämmung von < 4,5 (Spezialschwarz 4 Degussa) am Dissolver eingerührt, bis der gesamte Ruß benetzt war. Der pH-Wert wurde mit Ethanolamin auf ca. 7,5 eingestellt.

Im Anschluss wurde die Suspension in eine offene 11 Rührwerksmühle (Fabrikat Sussmeier, Brüssel) gegeben und mit 1,1-1,4 mm Zirkonoxidperlen 1 Stunde unter Kühlen gemahlen. Der pH-Wert wurde gegebenenfalls während der Mahlung nachgestellt. Diese Pigmentpräparation wurde zu einer Drucktinte formiert:

6,94 g Pigmentpräparation und 18,06 g Basisflüssigkeit wurden gemischt, durch 5 µm filtriert und auf einem HP 890 Drucker auf Normal-und Premiumpapier ausgedruckt.

Die im Cielabsystem gemessenen Werte für Y betrugen 4,4 auf Normal- und 2,2 auf Premiumpapier. Die Wiederandruckbarkeit nach 24 h bereitete keine Probleme.

Y ist ein Helligkeitsparameter des Cielab-Systems und somit ein Maß für die Farbstärke von Rußen. Je kleiner der Wert ist, desto schwärzer also farbstärker ist der Ruß auf dem Substrat (hier Papier).

### Beispiel 2

In 3300 g VE Wasser wurden 85 g eines oxiethylierten/oxipropylierten Polyethylenimins (mit 3 % Basenstickstoff, 55 % Polyoxyethylen, 3 % Polyoxipropylen mit einer mittleren Molmasse von 800 g/mol) und 330 g eines entsalzten Naphthalinsulfonsäure-Formaldehydkondensates (mittlere Molmasse 1200 g/mol) gelöst. Nun wurden 1250 g Spezialschwarz 4 (Degussa) am Dissolver eingerührt und der pH mit Ethanolamin auf 7,5 gestellt. Anschließend wurde die Dispersion in einer Perlmühle Advantis V-15 mit 0,6-0,8 mm Zirkonsilikatperlen 60 Minuten unter Kühlung im Kreislauf gemahlen. Der pH-Wert wurde gegebenenfalls während der Mahlung nachgestellt.

5 g Pigmentpräparation und 20 g Basisflüssigkeit wurden gemischt, durch 5 µm filtriert und auf einem HP 6122 Drucker auf Normal-und Premiumpapier verdruckt.

Die im Cielabsystem gemessenen Werte für Y betrugen 4,2 auf Normal- und 1,9 auf Premiumpapier. Ein Wiederandruck nach 24h war problemlos möglich.

### Beispiel 3

In 400 g VE Wasser wurden 20g entsalztes Naphthalinsulfonsäure-Formaldehyd-Kondensat (mittlere Molmasse 1000 g/mol), 6,5 g eines oxiethylierten/oxipropylierten Polyethylenimins (1,1 % Basenstickstoff, 63 % Oxiethylenanteil, 1 % Oxypropylenanteil) gelöst und am Dissolver langsam 75 g Spezialschwarz 4 eingerührt. Der pH wurde mit Ethanolamin auf 7,5 gestellt.

Im Anschluss wurde die Suspension in eine offene 11 Rührwerksmühle (Fabrikat Sussmeier, Brüssel) gegeben und mit 1,1-1,4 mm Zirkonoxidperlen 1 Stunde unter Kühlen gemahlen. Der pH-Wert wurde gegebenenfalls während der Mahlung nachgestellt. Diese Pigmentpräparation wurde zu einer Drucktinte formiert:

8,33 g der Pigmentpräparation und 16,67 g Basisflüssigkeit wurden gemischt, durch 5 µm filtriert und auf einem Epson 760 Drucker auf Normal- und Premiumpapier verdruckt.

Die im Cielabsystem gemessenen Werte für Y betrugen 5,2 auf Normal- und 1,7 auf Premiumpapier. Ein Wiederandruck nach 24 Stunden war problemlos möglich.

### Beispiel 4

In 214,8 g VE Wasser wurden 15,4 g eines oxiethylierten/oxipropylierten Polyethylenimins (1,1 % Basenstickstoff, 63 % Oxiethylenanteil, 1 % Oxipropylenanteil) und 32 g entsalztes Naphthalinsulfonsäure-Formaldehyd-Kondensat (Molmasse 1100 g/mol) gelöst und am Dissolver 140 g Pigmentblau 15 eingerührt.

Der pH wurde mit Ethanolamin auf 7,5 gestellt.

Im Anschluss wurde die Suspension in eine offene 11 Rührwerksmühle (Fabrikat Sussmeier, Brüssel) gegeben und mit 0,6-0,8 mm Zirkonoxidperlen 2 Stunden unter Kühlen gemahlen. Der pH-Wert wurde gegebenenfalls während der Mahlung nachgestellt.

Diese Pigmentpräparation wurde zu einer Drucktinte formiert:

1,43 g der Pigmentpräparation wurden mit 23,57 g der Basisflüssigkeit gemischt, über 5µm filtriert und mit einem HP 890 Drucker auf HP Normal (CHP 210)- und Premiumpapier verdruckt. Der brilliante Druck war streifenfrei und ein Wiederandruck war problemlos möglich.

Der Farbort lag auf Normalpapier bei:L=62, a= -11, b=-45, C=46
und auf Premiumpapier :L= 55, a= -16,4, b=-48 und C=51.

### Beispiel 5

In 229 g VE Wasser wurden 5 g eines oxiethylierten/oxipropylierten Polyethylenimins (mit 3 % Basenstickstoff und 55 % Oxiethylenanteil und 3 % Oxipropylenanteil und einer mittleren Molmasse von 800 g/mol) und 20 g entsalztes Naphthalinsulfonsäure-Formaldehyd-Kondensat (mittlere Molmasse 1000 g/mol) gelöst. Dann wurden 246 g wasserfeuchten Presskuchen von C.I. Pigment Yellow 150 mit einem Feststoffgehalt von 50,8 % am Dissolver eingerührt. Der pH wurde mit Triethanolamin auf 7,5 gestellt.

Im Anschluss wurde die Suspension in eine offene 11 Rührwerksmühle (Fabrikat Sussmeier, Brüssel) gegeben und mit 0,6-0,8 mm Zirkonoxidperlen 2 Stunden unter Kühlen gemahlen.

Der pH-Wert wurde gegebenenfalls während der Mahlung nachgestellt.

Diese Pigmentpräparation wurde zu einer Drucktinte formiert:
1,5 g der Pigmentpräparation wurden mit 23,5 g der Basisflüssigkeit gemischt, über 5 µm filtriert und mit einem HP 6122 Drucker auf Normal- und Premiumpapier verdruckt.

Auf Normalpapier liegt der Farbort bei : L=91 a=-5,4 b=60,5
Auf Premiumpapier liegt der Farbort bei :L=88,6 a=-5,2 b=74,4

Der brilliante Druck war streifenfrei und ein Wiederandruck war problemlos möglich.

### Beispiel 6

In 266,8 g VE Wasser wurden 6 g eines oxiethylierten/oxipropylierten Polyethylenimins (1,1 % Basenstickstoff, 63 % Oxiethylenanteil, 1 % Oxipropylenanteil) und 26 g entsalztes Naphthalinsulfonsäure-Formaldehyd-Kondensat (mittlere Molmasse 1100 g/mol) gelöst.

Am Dissolver wurden dann unter Rühren 100 g Pigment Rot 122 eingerührt und der pH mit Triethanolamin auf 7,5 gestellt.

Im Anschluss wurde die Suspension in eine offene 11 Rührwerksmühle (Fabrikat Sussmeier, Brüssel) gegeben und mit 0,6-0,8 mm Zirkonoxidperlen 2 Stunden unter Kühlen gemahlen. Der pH-Wert wurde gegebenenfalls während der Mahlung nachgestellt.

Diese Pigmentpräparation wurde zu einer Drucktinte formiert:
2 g der Pigmentpräparation wurden mit 23 g der Basisflüssigkeit gemischt, über 5µm filtriert und mit einem HP 890 Drucker auf Normal- und Premiumpapier verdruckt.

Der brilliante Druck war streifenfrei und ein Wiederandruck war problemlos möglich.

Der Farbort auf Normalpapier : L=53 a=52 b=-17 C=54,4
Der Farbort auf Premiumpapier L=44,5 a=62,3 b=-10 C=63,1

### Vergleichsbeispiel (nur oxalkyliertes Polyethylenimin)

In 3300 g VE Wasser wurden 415 g eines oxiethylierten/oxipropylierten Polyethylenimins (mit 1,1 % Basenstickstoff, 63 % Polyoxiethylen, 1 % Polyoxipropylen) gelöst. Nun wurden 1250 g eines sauren Gasrußes mit einer BET-Oberfläche von 180 m²/g (pH-Wert einer 5 %igen Anschlämmung ist < 4,5) am Dissolver eingerührt und der pH mit Ethanolamin auf 7,5 gestellt.

Anschließend wurde die Dispersion in einer Perlmühle Advantis V 15 mit 0,6-0,8 mm Zirkonsilikatperlen 60 Minuten im Kreislauf gemahlen. Der pH-Wert wurde gegebenenfalls während der Mahlung nachgestellt.

5 g Pigmentpräparation und 20 g Basisflüssigkeit wurden gemischt, durch 5 µm filtriert und auf einen HP 6122 Drucker auf Normal- und Premiumpapier verdruckt.

Die im Cielabsystem gemessenen Werte für Y betrugen 9,5 auf Normal- und 3 auf Premiumpapier. Verglichen mit den im Bsp. 2 erreichten Y-Werten ist also die erfindungsgemäße Kombination von Dispergiermitteln deutlich besser als die Verwendung des alkoxylierten Polyethylenimins alleine wie sie in DE-A-100 26 466 beschrieben ist.

## Patentansprüche

1. Pigmentpräparationen, enthaltend
a) wenigstens ein Pigment,
b) wenigstens ein Polyethylenimin, das alkoxyliert, insbesondere ethoxyliert und propoxyliert und/oder butoxyliert ist und
c) wenigstens ein Kondensationsprodukt auf Basis von
A) sulfonierten Aromaten,
B) Aldehyden und/oder Ketonen und gegebenenfalls
C) einer oder mehrerer Verbindungen, ausgewählt aus der Gruppe der nicht sulfonierten Aromaten, Harnstoff und Harnstoffderivaten.

2. Pigmentpräparationen gemäß Anspruch 1, enthaltend als Komponente b) ein alkoxyliertes Polyethylenimin, das pro NH-Funktion 1-10 Mol Propylenoxid- oder Butylenoxideinheiten und 10-40 Ethylenoxideinheiten aufweist.

3. Pigmentpräparationen gemäß Anspruch 1, bei denen das in der Komponente b) eingesetzte Polyethylenimin vor der Alkoxilierung ein mittleres Molgewicht von 400-25000 g/mol hat.

4. Pigmentpräparationen gemäß Anspruch 1, enthaltend die Komponente b) und c) in einer Menge von 0,1 bis 200 Gew.-%, bezogen auf das Pigment der Komponente a).

5. Pigmentpräparation gemäß Anspruch 1, enthaltend als zusätzliche Komponente e) ein wässriges Medium, vorzugsweise in einer Menge von 1 bis 98 Gew.-%.

6. Verfahren zur Herstellung von Pigmentpräparationen gemäß Anspruch 1, **dadurch gekennzeichnet, dass** die Komponente a) bis c) in Gegenwart von Wasser homogenisiert werden, gegebenenfalls von groben Partikeln vorzugsweise mittels Membran oder Glasfilter, befreit werden und gegebenenfalls die Pigmentpräparation getrocknet wird.

7. Verwendung der Pigmentpräparationen gemäß Anspruch 1 zum Bedrucken von flächigen oder dreidimensional gestalteten Substraten mittels Ink-Jet-Verfahren.

## Claims

1. Pigment preparations comprising
a) at least one pigment,
b) at least one polyethyleneimine which is alkoxylated, especially ethoxylated and propoxylated and/or butoxylated, and
c) at least one condensation product based on
A) sulphonated aromatics,
B) aldehydes and/or ketones and optionally
C) one or more compounds selected from the group consisting of nonsulphonated aromatics, urea and urea derivatives.

2. Pigment preparations according to Claim 1, comprising as component b) an alkoxylated polyethyleneimine which has 1-10 mol of propylene oxide or butylene oxide units and 10-40 ethylene oxide units per NH function.

3. Pigment preparations according to Claim 1, wherein the polyethyleneimine used in component b) has an average pre-alkoxylation molecular weight of 400-25 000 g/mol.

4. Pigment preparations according to Claim 1, containing components b) and c) in an amount of 0.1% to 200% by weight, based on the pigment of component a).

5. Pigment preparations according to Claim 1, containing an aqueous medium, preferably in an amount of 1% to 98% by weight, as an additional component e).

6. Process for producing pigment preparations according to Claim 1, **characterized in that** components a) to c) are homogenized in the presence of water, if necessary freed of coarse particles preferably by membrane or glass filter, and optionally the pigment preparation is dried.

7. Use of the pigment preparations according to Claim 1 for printing sheetlike or three-dimensionally configured substrates by ink jet processes.

## Revendications

1. Préparation de pigment contenant
a) au moins un pigment,
b) au moins une polyéthylène-imine qui est alcoxylée, en particulier éthoxylée et propoxylée et/ou butoxylée et
c) au moins un produit de condensation à base de
A) composés aromatiques sulfonés,
B) aldéhydes et/ou cétones et éventuellement
C) un ou plusieurs composés choisis dans le groupe constitué par des composés aromatiques non sulfonés, l'urée et des dérivés d'urée.

2. Préparations de pigments selon la revendication 1, contenant en tant que composant b) une polyéthylène-imine alcoxylée qui comporte par fonction NH 1-10 moles de motifs oxyde de propylène ou oxyde de butylène et 10-40 motifs oxyde d'éthylène.

3. Préparations de pigments selon la revendication 1, dans lesquelles la polyéthylène-imine utilisée dans le composant b) a avant l'alcoxylation une masse moléculaire moyenne de 400 - 25 000 g/mole.

4. Préparations de pigments selon la revendication 1, contenant le composant b) et c) en une quantité de 0,1 à 200 % en poids, par rapport au pigment du composant a).

5. Préparation de pigment selon la revendication 1, contenant en tant que composant supplémentaire e) un milieu aqueux, de préférence en une quantité de 1 à 98 % en poids.

6. Procédé pour la production de préparations de pigments selon la revendication 1, **caractérisé en ce que** les composants a) à c) sont homogénéisés, éventuellement séparés de grosses particules de préférence au moyen d'une membrane ou d'un filtre en verre, et la préparation de pigment est éventuellement séchée.

7. Utilisation des préparations de pigments selon la revendication 1, pour l'impression de supports de forme plate ou tridimensionnelle, par des procédés à jet d'encre.
